# EUROPEAN PATENT APPLICATION

(11) **EP 1 612 516 A1**
(43) Date of publication of application: **04.01.2006**
(21) Application number: 05254053.1
(22) Date of filing: 29.06.2005
(51) Int. Cl.: G01C 21/26, G08G 1/0969, G09B 29/10

(54) **Output control device, method thereof, program thereof, and recording medium storing the program**

(30) Priority: 30.06.2004 JP 2004194220
(71) Applicant: Pioneer Corporation, Tokyo 153-8654 (JP); Increment P Corporation, Tokyo 153-8665 (JP)
(72) Inventor: Hirose, Koji, c/o Increment P Corporation, Tokyo 153-8665 (JP)
(74) Representative: Haley, Stephen

(57) **Abstract**

A processor (270) of a navigation device (200) acquires contents data, and displays it on a display (420) of an output device (400). The processor (270) acquires program linked data of the contents data output by the output device (400). When the processor (270) recognizes that the contents data of the program linked data has a character string of location point character string information, acquires map information corresponding to the location points shown by the character strings as contents related map information, and displays it on the display (420) of the output unit (400).

## Description

The present invention relates to an output control device that outputs various pieces of information, a method thereof, a program thereof, and a recording medium storing the program.

Conventionally, there has been known a recording and reproducing device capable of acquiring EPG (Electric Program Guide) data distributed through the use of broadcast waves, and setting video recording program based on the EPG data (for example, see Document: Japanese Laid-Open Patent Publication 2002-112142, the left column of page 4 to the left column of page 13).

By the device according to the Document, EPG text data is created based on SI (Service Information) distributed as a TS (Transport Stream). Also, a program table is displayed based on the EPG text data. Furthermore, program titles, summaries and the like to be broadcasted in a specified time band are displayed in program cells partitioned by frames of the program table. Subsequently, a user moves the cursor, which is movably displayed on the program table to a program cell corresponding to a desired program, pressing a selection key allows to set an audiovisual program.

However, with the recording and reproducing device described in the above Document, since the audiovisual program can only be set for each program, there is inconvenience that, for example, the location point relating to a specific scene of the program, or information peculiar to a specific location point is unclear. Owing to this, configuration that provides the output of better information is desirable.

An object of the present invention is to provide an output control device capable of appropriately outputting various pieces of information, a method thereof, a program thereof, and a recording medium storing the program.

An output control device according to an aspect of the present invention includes: a program data acquirer that acquires program data including image data; a contents data acquirer that acquires contents data relating to contents of the program data distributed together with the program data; a display controller that controls to display the image data on a display unit; a searching section that searches for location point information relating to a location point from the contents data; and a map information acquirer that acquires map information corresponding to a specific region including the location point of searched location point information, in which the display controller controls to display the acquired map information on the display unit.

An output control device according to another aspect of the present invention includes: a route location point information acquirer that acquires route location point information relating to a location point in the vicinity of a route on which a movable body moves; a map information acquirer that acquires map information corresponding to a specific region including the location point of the route location point information; a display controller which controls to display the map information on a display unit; a program data acquirer that acquires program data including image data; a contents data acquirer that acquires contents data relating to contents of the program data distributed together with the program data; and a searching section that searches the route location point information from the contents data, in which the display controller controls to display image data of the program data corresponding to the contents data in which the route location point information can be searched.

An output control method according to still another aspect of the present invention controls a computing section to display map information on a display unit, the method executed by the computing section including the steps of: acquiring program data including image data; acquiring contents data relating to contents of the program data distributed together with the program data; controlling the display unit to display the image data; searching location point information relating to a location point from the contents data; acquiring the map information corresponding to a specific region including the location point of the searched location point information; and controlling the display unit to display the acquired map information.

An output control method according to yet another aspect of the present invention controls a computing section to display image data of program data which includes the image data, the method executed by the computing section including the steps of: acquiring route location point information relating to a location point in the vicinity of a route on which a movable body moves, acquiring map information corresponding to a specific region including the location point of the route location point information; controlling the display unit to display the map information; acquiring the program data; acquiring contents data relating to contents of the program data distributed together with the program data; searching the route location point information from the contents data; and controlling the display unit to display the image data of the program data corresponding to the contents data by which the route location point information can be searched.

An output control program according to a further aspect of the present invention makes a computing section function as the above-described output control device.

An output control program according to a still further aspect of the present invention executes the above-described output control method by a computing section.

A recording medium according to a yet further aspect of the present invention stores the above-described output control program in a manner readable by a computing section.

In the Drawings;
Fig. 1 is a block diagram that shows the brief configuration of a navigation system according to a first embodiment of the present invention;
Fig. 2 is a conceptual diagram that shows a table structure of display data for constituting map information according to the first and second embodiments;
Fig. 3 is a conceptual diagram that shows a table structure of matching data for constituting the map information according to the first embodiment;
Fig. 4 is a block diagram that shows the brief configuration of a processor for constituting a navigation device according to the first embodiment;
Fig. 5 is a schematic illustration that shows an example of a display screen according to the first embodiment;
Fig. 6 is a schematic illustration that shows an example of a display screen according to the first and second embodiments;
Fig. 7 is a flowchart that shows processing in an output control mode based on a set location point according to the first embodiment;
Fig. 8 is a flowchart that shows processing in the output control mode based on external video image according to the first embodiment;
Fig. 9 is a block diagram that shows the brief configuration of a contents processing system according to the second embodiment;
Fig. 10 is a block diagram which shows the brief configuration of a processor for constituting a contents processing device according to the second embodiment; and
Fig. 11 is a flowchart that shows processing in a contents related map output mode according to the second embodiment.

### [First Embodiment]

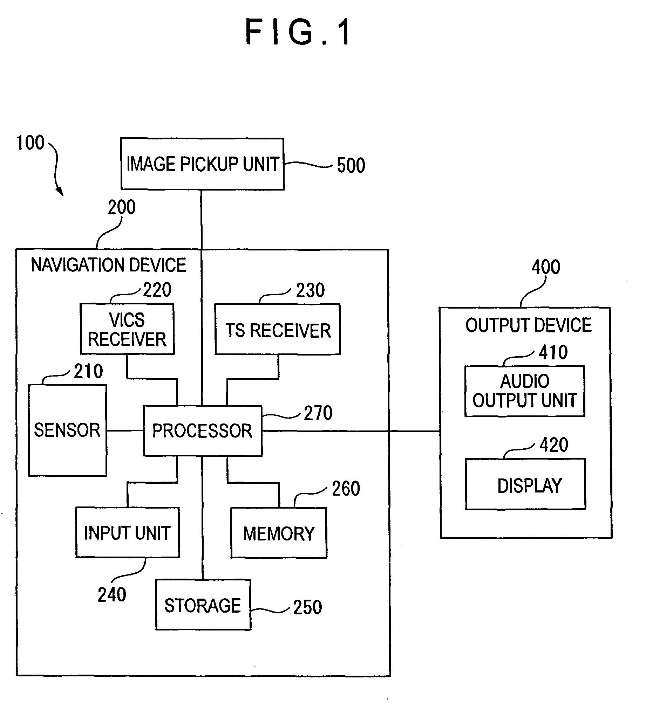

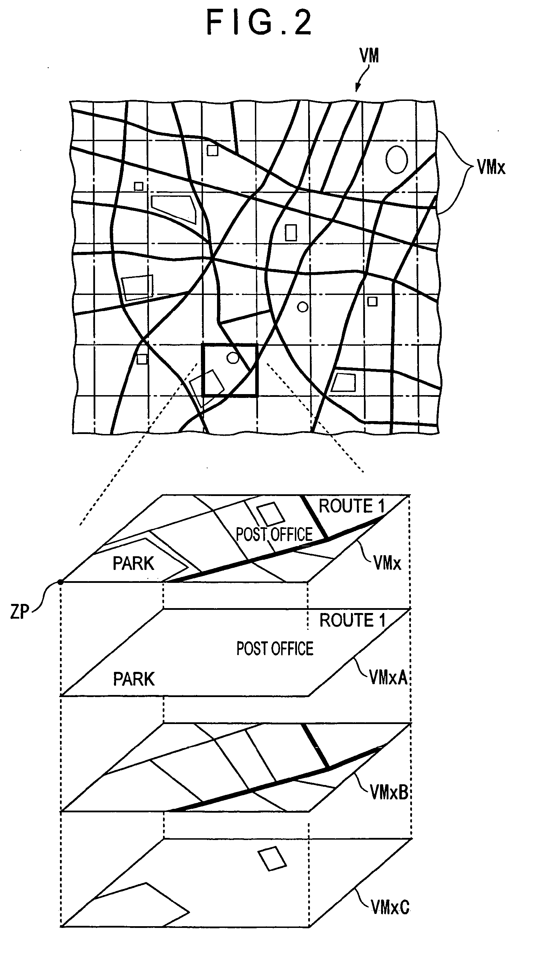

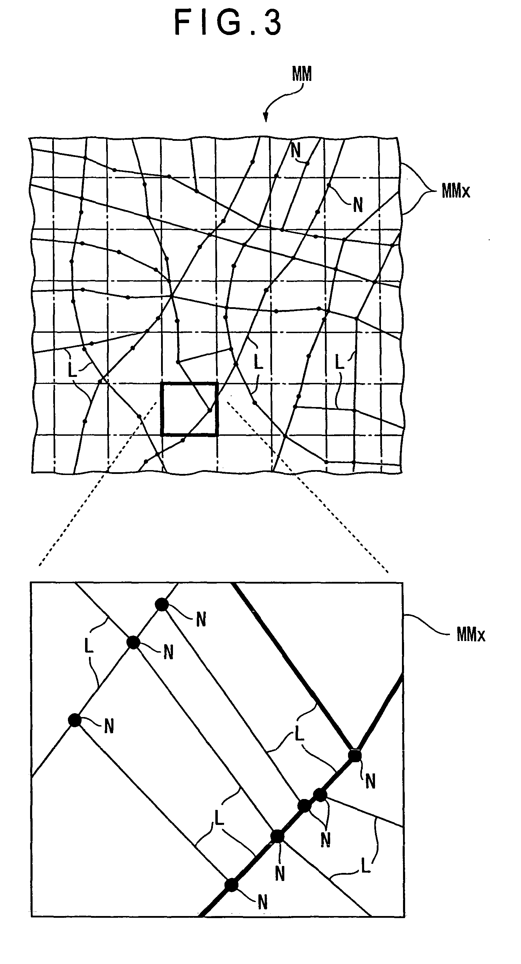

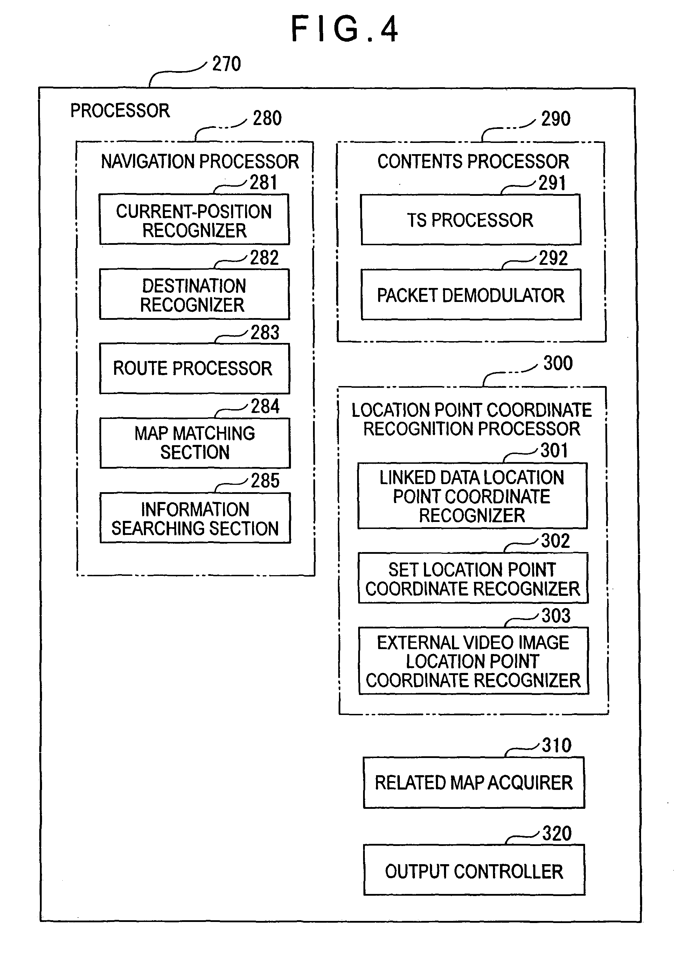

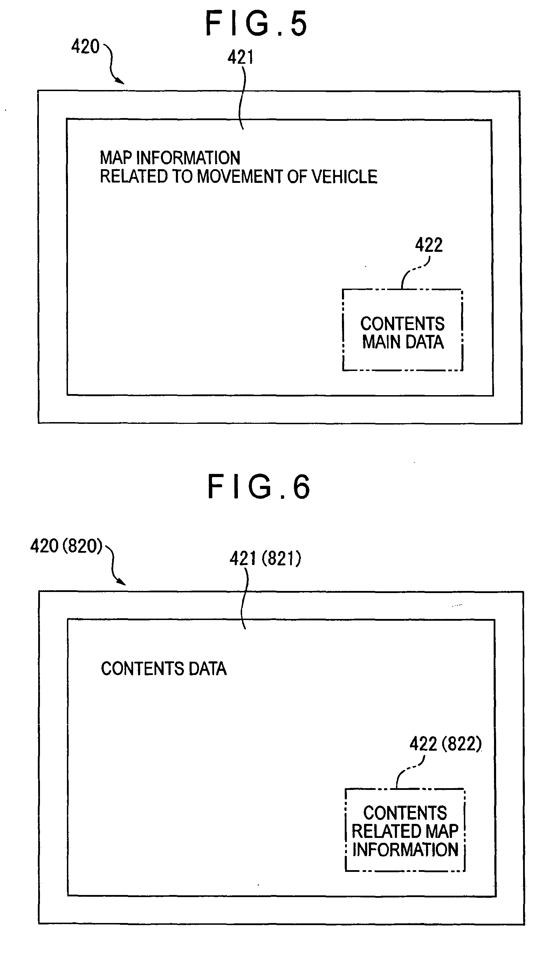

An explanation of a first embodiment of the present invention is provided hereafter with reference to the drawings. The first embodiment relates to a navigation system which has a navigation device equipped with an output control device of the present invention. A configuration is explained which not only provides navigation guidance for the operation of, for example, a vehicle as a movable body, but also outputs contents of a television program or the like transmitted by using broadcast waves. In addition, an explanation is provided as an example of configuration in which audio data and video data corresponding to a specific scene of the contents are synchronized with program linked data, explained hereafter, linked to the specific scene, and then output it. Note that, the navigation system is not limited to a configuration which provides navigation guidance for the operation of the vehicle, but may be configuration which provides traffic conditions of any movable body. Fig. 1 is a block diagram which shows the brief configuration of a navigation system. Fig. 2 is a conceptual diagram which schematically shows a table structure of display data constituting map information. Fig. 3 is a conceptual diagram which schematically shows a table structure of matching data constituting the map information. Fig. 4 is a block diagram which shows the brief configuration of a processor which constitutes a navigation device. Fig. 5 is a schematic illustration which shows an example of a display screen. Fig. 6 is also a schematic illustration which shows an example of the display screen.

### [Configuration of Navigation System]

In Fig. 1, the number 100 represents a navigation system. The navigation system 100 is a system that provides guidance relating to the moving state of, for example, a vehicle as a movable body, and outputs a map related to the contents or contents of a television program related to the position of the moving vehicle. Note that, as the movable body, the target is not limited to a vehicle, but may be any movable body, such as an airplane or a boat. Also, the navigation system 100 has a navigation device 200, an output device 400, and an image pickup unit 500.

The output device 400 receives map information or contents data input from the navigation device 200 and outputs them. Also, the output device 400 has an audio output unit 410, a display 420 as a display unit and the like.

The audio output unit 410 has, for example, an audio generator such as a speaker or the like (not shown). The audio output unit 410 outputs audio data transmitted as audio signals from the navigation device 200, as an audio output from the audio generator. In this instance, as audio output information may be various pieces of information which provide guidance for the operation of the vehicle, such as the direction of travel, the operating state of the vehicle, traffic condition and the like. Note that, the audio generator may also be capable, for example, of appropriately outputting TV audio data received by a TV receiver (not shown). In addition, the audio output unit 410 is not limited to configuration in which there is an attached audio generator, but may also use configuration which makes use of an audio generator mounted in the vehicle.

The display 420 displays image data transmitted as image signals from the navigation device 200. In this instance, display information may be map information, search information, images of the contents, and various pieces of information linked to the specific scene of the contents, data broadcasts, composite images and the like. The display 420 may be a liquid crystal display panel, an organic EL (Electro Luminescence) panel, a PDP (Plasma Display Panel), a CRT (Cathode-Ray Tube), an FED (Field Emission Display), an electric floating display panel or the like. Note that, the display 420 is also able to appropriately output, for example, TV video data received by a TV receiver.

The image pickup unit 500 is arranged, for example, in the vicinity of a vehicle windshield (not shown). Note that, in this instance, an example is given of a configuration in which the image pickup unit 500 is arranged in the vicinity of the windshield. However, the configuration is not limited to this arrangement, and an arrangement may be made on an outer periphery of a passenger compartment (not shown). The image pickup unit 500 takes a video image (hereafter referred to as external video image) of an object as landscape information outside the vehicle, such as billboards positioned in front of the vehicle. Also, taken the external video images are sent to the navigation device 200 as external video image signals.

The navigation device 200, may be a type mounted in a vehicle as a movable body, a portable type, a PDA (Personal Digital Assistant), a portable telephone, a PHS (Personal Handy Phone System), a portable personal computer or the like. The navigation device 200 executes a search and the like of the routes to destinations, and neighboring desired outlets and the like based on map information held in the navigation device 200. In addition, various pieces of information relating to thoroughly searched routes or outlets, or information relating to a current-position or destination, are output by the output device 400. Furthermore, the navigation device 200 acquires contents data including audio data, video data, and data used for data broadcasting, transmitted as a TS (Transport Stream), and outputs the data by the output device 400. In addition, along with the contents data, map information relating to the contents data is appropriately output. Furthermore, various pieces of information relating to the location points, along which a movable body moves, as well as contents data relating to the location points are appropriately output. In this instance, when collecting and representing the audio data and video data held by the contents data, they are abbreviated as contents main data used as program data. Also, the navigation device 200 has a sensor 210, a VICS (Vehicle Information Communications System: Road Traffic Information Communication System) receiver 220, a TS receiver 230, an input unit 240, a storage 250, a memory 260, a processor 270 used as a computing unit, and the like.

The sensor 210 detects the movement state of vehicle as the movable body, i.e., the current-position or operating state, and outputs it as a sensor signal to the processor 270. The sensor 210 is constituted, for example, of a GPS (Global Positioning System) receiver (not shown), and various sensors (not shown) such as a speed sensor, an azimuth sensor, an acceleration sensor, and the like.

The GPS receiver receives the navigation waves output from the GPS satellite (unshown artificial satellite) via a GPS antenna (not shown). Also, the GPS receiver computes the simulated coordinate values of the current-position based on signals corresponding to the received navigation waves, and outputs to the processor 270 as GPS data.

Note that, the speed sensor of the sensor 210 is located, for example, in the vehicle as the movable body, and detects the operating speed or the actual acceleration of the vehicle based on signals which change corresponding to the operating speed of the vehicle. The speed sensor reads out the pulse signals or voltage values output by the axels or the rotation of the wheels. Also, the speed sensor outputs speed detection information of the read out pulse signals or voltage values to the processor 270. The azimuth sensor, which is located in the vehicle and provided with a so-called gyro-sensor (not shown), detects the operating direction in which the vehicle is proceeding. The azimuth sensor outputs operating direction information, which is movement direction information relative to the detected operating direction to the processor 270. The acceleration sensor located in the vehicle detects the acceleration of the vehicle in the direction of operation, and converts the detected acceleration to sensor output values, which is detection information using, for example, pulses or electric voltage, and outputs the values to the processor 270.

The VICS receiver 220 has a VICS antenna (not shown), and acquires information relating to traffic via the VICS antenna. Specifically, traffic information (hereafter referred to as VICS data) is obtained from the unshown VICS, by beacon or FM multiplex broadcasts relating to congestion, traffic accidents, configuration, traffic regulations and the like, and the acquired traffic related information is output to the processor 270 as VICS signals.

The TS receiver 230 is connected to a TS antenna (not shown), which receives, for example, the terrestial digital broadcasts, and satellite digital broadcasts and the like. The TS receiver 230 acquires TS corresponding to the contents selected by the user from among multiple TS transmitted as digital signals from the TS antenna by the control of the processor 270. Also, the acquired TS is output to the processor 270 as TS signals.

In this instance, data for data broadcasts distributed as TS data may be either program linked data or program non-linked data. The program linked data is data for output by the output device 400 in which various pieces of information linked to a specific scene is synchronized with the scene. The program linked data may be data which outputs information relating, for example, to an entertainer of the specific scene, outlets and buildings introduced in a specific scene, or a specific project in the contents. Also, program linked data is provided, for example, with linked BML (Broadcast Markup Language) files. The linked BML files are provided with linked text data, linked additional data and the like. There are also occasions in which the linked BML files do not include linked additional data. The linked additional data may include information of other than characters which are linked to the specific scene of the contents, such as data for images or audio output. The linked text data includes contents data, synchronizing information and the like. The contents data is data for outputting characters showing the contents relating to a specific scene of the contents. The synchronizing information is information for synchronizing the output of the contents main data corresponding to the specific scene of the contents with the contents data and the linked additional data. Specifically, the synchronizing information has linked data output start information relating to the date and time at which the output of each data held by the linked BML files is started and linked data output time information relating to the period of time while each of the data is output. In the present embodiment, as described above, since the contents main data of a specific scene and the program linked data linked to the specific scene are synchronized and output, distribution start date and time information of the present invention is constituted by the linked data output start information. In addition, distribution termination date and time information of the present invention is constituted by information relating to the date and time at which the output of each data of the linked BML files is completed, the linked BML files being obtained based on the linked data output start information and the linked data output time information.

The program non-linked data is data for outputting by the output device 400 various information which are not linked to the contents output by the contents main data. The program non-linked data may be, for example, whether information or news. The program non-linked data has a non-linked BML file. Also, the non-linked BML file has non-linked text data, non-linked additional data and the like. The non-linked text data is data for outputting characters which show non-linked contents. The non-linked additional data is data for outputting, for example, images or audio which is linked to the contents shown in the non-linked text data.

The input unit 240 has various operating buttons or switches (not shown), arranged, for example, at the front of a case (not shown) for input operation. The contents of the input operation of operating button or operating switch may include, for example, the set items for setting operational contents of the navigation device 200. Specifically, the set items may be the setting of the contents of acquired information or the conditions for its acquisition, the setting of a destination, searching of information, and displaying of the operating state or the moving state of the vehicle, setting of the TS received by the TS receiver 230, and setting of the output control mode, which is the mode for outputting map information or contents main data based on the set location point or external video images described later. Also, the input unit 240 outputs various pieces of information by the input operation of set items to the processor 270 as operating signals for setting. Furthermore, the input unit 240 is not limited to the input operation of operating buttons or operating switches, and can be constituted, for example, by configuration capable of input operation by a touch panel, or audio mechanism attached to the display 420 of the output device 400. In addition, configuration may be set so that various pieces of information is received after transmission through an infrared beam from a remote controller, and output to the processor 270 as operating signals.

The storage 250 has a map information storage region which stores map information and the like, such as that shown, for example, in Fig. 2 and Fig. 3; and an un-shown corresponding coordinate information storage region which stores location point character string corresponding coordinate information, and the like. In this instance the example was configuration in which the storage 250 was provided with two storage regions. However, configuration is not limited to this, and may have separate databases, or other additional storage regions. Also, the storage 250 may be drives or drivers readably stores on recording medium i.e., magnetic disks such as an HD (hard disk), optical discs such as a DVD (Digital Versatile Disc), or memory cards.

In this instance, the map information has, for example, display data VM as POI (Point of Interest) data shown in Fig. 2, and matching data MM shown in Fig. 3 and map data for travel route search.

The display data VM is provided, for example, with multiple display mesh information VMx to which particular numbers are respectively added. In other words, the display data VM is multiply divided into display mesh information VMx relating to a part of a region, constituted such that the display mesh information VMx is multiply continued vertically and horizontally. Note that, the display mesh information VMx may also be further multiply divided into the display mesh information VMx of a lower layer relating to an appropriate part of a region. Each display mesh information VMx are divided into the set length of a side, or in other words into rectangles with compressed lengths corresponding to the scaling down of the length of the actual topography onto a map, and specific corners have information of absolute coordinates ZP of the entire map information or the world map.

Also, the display mesh information VMx is constituted with, for example, name information VMxA including the names of points of intersection, road information VMxB, and background information VMxC. The name information VMxA is constituted into a table structure of data arranged and displayed in specified positions according to a positional relationship with the absolute coordinates ZP, in which the names of, for example, points of intersection, or the names of regions defined as other element data within the region are given. The road information VMxB is constituted into a table structure of data in which roads defined as the road element data in the region are arranged and displayed in specified positions according to the positional relationship with the absolute coordinates ZP. The background information VMxC is constituted into a table structure of data in which marks showing prominent locations or structures defined as other element data, or images information defined as other element data which shows the prominent locations, structures or the like are arranged and displayed in specified positions according to the positional relationships with the absolute coordinates ZP.

On the other hand, matching data MM, as with the display data VM, is constituted to be multiply divided into matching mesh information MMx relating to a part of a region to which particular numbers have been added, and the matching mesh information MMx is multiply continued vertically and horizontally. Note that, the matching mesh information MMx may also be further multiply divided into the matching mesh information MMx of a lower layer relating to an appropriate part of a region. Each matching mesh information MMx is divided into the set length of a side, or in other words into rectangles with compressed lengths corresponding to the scaling down of the length of the actual topography onto a map, and specific corners have information of the absolute coordinates ZP of the entire map information or the world map. Note that, the matching mesh information MMx may have configuration which shows a different region from that of the display mesh information VMx; or in other words the scale of the divided region may also be different. In this instance, if the scale is the same, the data may be associated with each other by particular numbers. In contrary, if the scale is different, then, for example, the data may be associated with each other by the absolute coordinates ZP.

For example, when the moving state of a vehicle is superposed on the map information, in order to prevent the erroneous display representing the vehicle from becoming positioned on a structure instead of a road, the matching data MM is used for map matching processing which corrects the display so that the mark representing the vehicle is positioned on a road. The matching data MM has multiple link string block information.

The link string block information, as shown in Fig. 3, constitutes a table structure of data in which link L, i.e. line segments connecting nodes N representing location points for defining the road are associated with each other upon a specific rule. Specifically, the specific length of a road, such as continuous roads of the Kosyu street and the Ome street, the links L are associated with each other by the link string continuously extending with as bending lines. Also, the link L has segment specific information (hereafter referred to as link ID) i.e. particular number attached to each link L, and node information of particular numbers and the like which represent two nodes N connected by the link L.

The node N corresponds to the points of intersection, bending, branching and merging. Also, information relating to node N includes location point specific information which is particular number attached to each node N in the link string block information, coordinate information relating to the position of each node N, and flag information which is branching information relating to whether there are branch position where the multiple links are crossed with each other, i.e. the points of intersection or branching point. Note that, the node N may only include the location point specific information and the coordinate information without the flag information for simply showing the state of a road; or may further include attribute information which shows the configuration of tunnels, the width of the roads or the like.

Furthermore, to the link string block information of the matching data MM, information relating to the configuration of the roads, such as the number of vehicle lanes, whether they are trunk lines, whether they are national highways or prefectural highways, the type of road, such as a toll road or the like, or whether they pass through a tunnel are associated thereto. According to information relating to the configuration of the roads, it is possible to display roads corresponding to the display data VM, on a map.

In addition, map information used for travel route search has the same table structure as that of the matching data MM. In other words, information configuration which represents roads for travel route search uses the table structure provided with information which represents location points such as nodes N defining roads, and information connecting the location points such as link L.

The location point character string corresponding coordinate information is information relating to map coordinates corresponding to specific location points or regions. Also, the location point character string corresponding coordinate information is information in table structure in which location point character string information used as location point information functioning even as unshown route location point information, and corresponding coordinate information are constituted as single data configuration.

The location point character string information is information relating to character strings which show addresses or specific longitude and latitude; or character strings which show cities or regions; or character strings which show the names of facilities or outlets. The corresponding coordinate information is information which shows the map coordinate of location points shown by the location point character string information. In the case where the corresponding coordinate information is such that the character strings of the location point character string information show regions within broad parameters of city or region names, the information relates to coordinates which correspond to the center of the cities or regions.

Furthermore, in the storage 250, search information is stored for acquiring, for example, the specific location point information in the map information. In other words, the search information has the table structure of tree configuration including various pieces of information relating to contents and guidance of regions hierarchically divided into multiples, such as prefectural roads, city, town and village names, region names, location points name and the like, or facility related information relating to facilities etc., and these item information are associated in several layers.

In this instance an example is given of configuration including the corresponding coordinate information storage region which stores the location point character string correspondent coordinate information in the storage 250. However, the configuration is not limited to this, and configuration may also be stored with the corresponding coordinate information associated with the facility related information of the search information, without the corresponding coordinate information storage region.

The memory 260 readably stores set items input by the input unit 240, various pieces of information acquired and generated by the processor 270, and audio or image data and the like. In addition, the memory 260 stores each type of program running on an OS (Operating System) for operationally controlling the entire navigation device 200. As the memory 260, it is desirable that use be made of a memory, for example CMOS (Complementary Metal Oxide Semiconductor) memory, so that recordings are preserved even when there is a sudden drop in electric power caused by a blackout.

Note that, as the memory 260, configuration may also be used with a drive or a driver which can readably record onto the recording medium of an HD, a DVD, an optical disk or the like.

The processor 270 has each type of input and output port (not shown), such as an output control port connected to the output device 400; a image pickup port connected to the image pickup unit 500; a VICS reception port connected to a VICS antenna; a GPS reception port connected to a GPS receiver; a sensor port respectively connected to each type of sensor; a TS reception port connected to a TS antenna; a key input port connected to the input unit 240; a storage port is connected to the storage 250; and a memory port is connected to the memory 260 and the like. Also, the processor 270 is provided, as each type of program, as shown in Fig. 4, with a navigation processor 280; a contents processor 290; a location point coordinate recognition processor 300; a related map acquirer 310 as a map information acquirer; a program data acquirer; a distribution date and time information acquirer, an output controller 320 which also functions as a display controller, and the like.

The navigation processor 280 appropriately generates various pieces of information relating to the movement of the vehicle. Also, the navigation processor 280 has a current-position recognizer 281; a destination recognizer 282; a route processor 283; a map matching section 284; an information searching section 285, and the like.

The current-position recognizer 281 recognizes the current-position of the vehicle. Specifically, the current-position recognizer 281 calculates a plurality of current simulated positions of the vehicle based on the speed data and the azimuth data of the vehicle output from the speed sensor and the azimuth sensor of the sensor 210. Furthermore, the current-position recognizer 281 recognizes the plurality of current simulated coordinate values of the vehicle based on the GPS data relating to the current-position output from the GPS receiver. Also, the current-position recognizer 281 compares the calculated current simulated positions with the recognized current simulated coordinate values, and calculates the current vehicle position in the separately acquired map information, to recognize the current-position.

In addition, the current-position recognizer 281 determines the inclination and the height differences of the road on which the vehicle is operating, based on the acceleration data output from the acceleration sensor, and calculates the current simulated position of the vehicle, in order to recognize the current-position. In other words, even in locations in which three-dimensional points of intersection, a highway and the like are overlaid on a plane surface, the current-position of the vehicle can be accurately recognized. Furthermore, when operating on mountain roads or sloped roads, the accurate current-position can be recognized by correcting errors generated between the moving distance obtained only from speed data and the azimuth data, and the actual operating distance of the vehicle, by using the detected inclination of the road. Note that, the current-position recognizer 281 is able to recognize the departure location point which is the start point set and input by the input unit 240 as the simulated current-position in addition to the current-position of the vehicle. Also, the current-position information obtained by the current-position recognizer 281 is appropriately stored in the memory 260.

The destination recognizer 282 acquires the destination information relating to the destination set and input by the input unit 240, enabling the recognition of the location of the destination. The set and input destination information, may apply various pieces of information to specify, for example the longitudinal and latitudinal coordinates, the address, telephone numbers and the like. Also, the destination information recognized by the destination recognizer 282 is appropriately stored in the memory 260.

The route processor 283 searches the route by computing the moving route of the vehicle based on the set item information for the route set by the input of the user, the VICS data acquired by the VICS receiver 220, and the map information stored in the storage 250.

Specifically, the route processor 283 acquires the current-position information, the destination information, the VICS data, and the set item information. Once the route processor 283 has acquired various pieces of information, a road on which the vehicle is capable of traveling can be searched by using the map information for travel route search of the map information. Also, travel route information can be generated to set the route requiring the shortest time, or the route with the shortest distance, or a path to avoid traffic congestion or traffic regulated locations. Note that, by searching the travel route, there are other cases using the matching data MM of map information other than the map information for travel route search. For example, that is the case where a travel route is searched using roads not included in the map information, when searching narrow backroads and the like. In addition, travel route information may also include route guidance information to provide guidance for driving when operating the vehicle. Such route guidance information may also assist in driving through the appropriate display or audio output by the output device 400 by the control of the output controller 320. Note that, the travel route information generated by the route processor 283 is appropriately stored in the memory 260.

The map matching section 284 accomplishes matching processing in order to appropriately display the current-position recognized by the current-position recognizer 281 based on the map information acquired from the storage 250. The map matching section 284, as indicated above, uses, for example, matching data MM to superpose the current-position on a map using the output device 400, and so that the displayed position will not deviated from the road constituting the map displayed by the output device 400, and matching processing is executed to appropriately correct and display the current-position information.

The information searching section 285 hierarchically searches and acquires search information stored in the storage 250 by a search request for the search of information set and input by the input unit 240 based on such information items as, for example, outlets or facilities.

The contents processor 290 accomplishes processing which appropriately demodulates the TS received by the TS receiver 230, in the contents data. Also, the contents processor 290 has a TS processor 291 and a packet demodulator 292.

The TS processor 291 separates TS packets which incorporate the contents data selected by the user from the TS acquired by the TS receiver 230 and appropriately outputs them to the packet demodulator 292. Specifically, the TS processor 291 acquires the TS output as a TS signal from the TS receiver 230, and further separates TS packets (hereafter referred to as audio packets) which incorporate audio data corresponding to the contents selected by the user from the TS; the TS packets which incorporate video data (hereafter referred to as video packets); TS packets which incorporate data used for data broadcasts; EPG data and the like (hereafter referred to as data packets). Also, the TS processor 291 appropriately outputs each separated packet to the packet demodulator 292.

The packet demodulator 292 appropriately demodulates each packet from the TS processor 291 in the contents data. Specifically, once the packet demodulator 292 has acquired an audio packet from the TS processor 291, it demodulates the audio data incorporated in the audio packet. In addition, once a video packet or data packet has been acquired from the TS processor 291, it demodulates the data used for video data or data broadcasts, or the EPG data incorporated in each packet. Also, each demodulated data is appropriately output to the output controller 320. Furthermore, the demodulated program linked data is appropriately output to the location point coordinate recognition processor 300.

The location point coordinate recognition processor 300 appropriately recognizes coordinates corresponding to character strings which show location points and the like included in program linked data or external video images, or character strings which show location points along which the vehicle moves, and the like. Also, the location point coordinate recognition processor 300 has a linked data location point coordinate recognizer 301 which also functions as a contents data acquirer and a searching section; a set location point coordinate recognizer 302 which also functions as a route location point information acquirer; an external video image location point coordinate recognizer 303 which also functions as a landscape location point information recognizer; and the like. The output control device of the present invention is constituted with the linked data location point coordinate recognizer 301; the set location point coordinate recognizer 302; the external video image location point coordinate recognizer 303; the related map acquirer 310; and the output controller 320. Incidentally, as the output control device of the present invention may be configuration which does not include at least one of the set location point coordinate recognizer 302 and the external video image location point coordinate recognizer 303.

If the linked data location point coordinate recognizer 301 is recognized to have a character string in which the contents data of the program linked data is shown by the location point character string information of the location point character string corresponding coordinate information; or in other words if it is recognized to have a character string of specific location point, city name, or region, then the coordinates on the map information corresponding to the location points shown by the character string are recognized. In this instance, an explanation is provided of a character string explained by the location point character string information from among character strings held by the contents data, appropriately abbreviating a linked data location point character string. In addition, an explanation is provided of the coordinates on the map location corresponding to a linked data location point character string, appropriately abbreviating a linked data location point coordinates.

Specifically, the linked data location point coordinate recognizer 301 acquires the program linked data which has been demodulated by the contents processor 290. Furthermore, a search is made of the character strings of the location point character string information stored in the storage 250, from the contents data of the program linked data. When recognizing that the character string of the location point character string information can be searched from the contents data, or that the program linked data includes the linked data location point character string, then the coordinates of corresponding coordinate information corresponding to the location point character string information obtained by the search are recognized as the linked data location point coordinates.

The set location point coordinate recognizer 302 recognizes the coordinates of the map information corresponding to its location points or region, based on information relating to the location points or a region in which the vehicle moves, created by the navigation processor 280. In this instance, an explanation is provided of specific location points which have been appropriately abbreviated as set location points, based on various pieces of information relating to the movement of the vehicle, generated by the navigation processor 280. In addition, the coordinates of the map information corresponding to the set location points are explained and appropriately abbreviated as set location point coordinates.

Specifically, the set location point coordinate recognizer 302 appropriately acquires set location point information relating to set location points. In this instance, as the set location points, examples may be at least one of: the current-position and the destination of the vehicle; the location points within a radius of 1 kilometer from the above positions; the location points in the direction of progress from the current-position in the periphery of the travel route set by the navigation processor 280; the location points within a radius of 1 kilometer and at an angle of 30 degrees to the direction of progress; or location points within a region which can be reached within 30 minutes from the current-position. However the set location points are not limited to these examples. Also, the set location point coordinate recognizer 302 acquires information from the navigation processor 280, used for specifying the set location points, based on the set location point information. For example, the set location point coordinate recognizer 302, in the case where the set location points are specified based on the current-position, acquires the current-position information from the current-position recognizer 281. In addition, in the case where the location points are specified based on the destination, the destination information is acquired from the destination recognizer 282. Furthermore, in the case where the location points are specified based on a set travel route, the travel route information is acquired from the route processor 283. Also, the set location point coordinate recognizer 302 specifies set location points based on the acquired information. Furthermore, recognition of the set location point coordinates of the specified set location points is recognized based on map information and the like.

If the external video image location point coordinate recognizer 303 is recognized as having a character string shown by the location point character string information of the location point character string correspondent coordinate information in an external video image photographed by the image pickup unit 500, then the coordinates are recognized on the map information corresponding to the location points and the like shown by the character string. An explanation is provided hereafter of a character string shown by the location point character string information from among character strings residing in the external video image, in which the external location point character string is appropriately abbreviated as landscape location point information.

Specifically, the external video image location point coordinate recognizer 303 appropriately controls the operation of the image pickup unit 500, and photographs the external video image. Also, in acquiring the external video image, a search is conducted of the character string of the location point character string information stored in the storage 250 from the character strings residing in the external video image. When it is recognized that a search is made of the character strings of the location point character string information from the character strings of external video images, in other words, when the presence of external video image location point character strings is recognized in an external video image, the coordinates of the corresponding coordinate information corresponding to the location point character string information obtained by the search are recognized as the external video image location point coordinates.

The related map acquirer 310 appropriately acquires map information corresponding to the linked data location point coordinates from the map information storage region of the storage 250. Here, an explanation is provided of the map information corresponding to the linked data location point coordinates, appropriately abbreviating contents related map information. Specifically, the related map acquirer 310 searches the map information which has information of the absolute coordinates ZP corresponding to the linked data location point coordinates from the map information storage region. Also, the searches map information is acquired as the contents related map information.

The output controller 320 appropriately controls the output of various pieces of information in the output device 400. Specifically, if the output controller 320 recognizes being set to the navigation mode i.e. the mode in which map information relating to vehicle movement is output by the output device 400 by an operating signal based on an input to the input unit 240, then various pieces of information are acquired from the navigation processor 280. Also, the various pieces of information are output by the output device 400. For example, the output controller 320 outputs guidance relating to vehicle movement based on information stored in the memory 260 and the like corresponding to the operating state of the vehicle; for example guidance containing contents for supporting the operation of the vehicle in audio form by the output unit 410 or in visual form by the display 420 of the output device 400. Specifically, audio output may be generated by the audio output unit 410 which may state, for example, "700 meters ahead, go right to yy at xx intersection point", "you have left the travel route", and "there is congestion ahead", and a display of specified arrows or indication marks such as those shown in Fig. 5 are displayed in the display region 421 of the display 420.

In addition, if the output controller 320 recognizes being set to the contents mode i.e. the mode in which the contents data is output by the output device 400 by an operating signal based on an input to the input unit 240, contents data is acquired from the contents processor 290. Also, if the contents data are vocally enunciated by the audio output unit 410 of the output device 400, or it is displayed, for example, in the display region 421 of the display 420, as shown in Fig. 6.

Furthermore, the output controller 320, in addition to the map information relating to vehicle movement, appropriately outputs the contents main data relating to the moving location points by the output device 400. Specifically, in the state set to the navigation mode, if the output controller 320 recognizes, for example, to be set to the output control mode based on the set location points, then the following processing is executed. In other words, there is correspondence between the linked data location point coordinates recognized by the linked data location point coordinate recognizer 301 and the set location point coordinates recognized by the set location point coordinate recognizer 302, and, for example, a determination is made as to whether the distance between the coordinates is shorter than a specified distance. In this instance, if it is recognized as being set to the output control mode based on an external video image, then a determination is made as to whether there is correspondence between the linked data location point coordinates and the external video image location point coordinates recognized by the external video image location point coordinate recognizer 303. Also, if it is determined that the coordinates correspond, then synchronizing information of the program linked data used at the time the linked data location point coordinates are recognized by the linked data location point coordinate recognizer 301 is obtained. Furthermore, the contents data including the program linked data is obtained from the contents processor 290. Also, in a state in which there is continued output of the map information relating to vehicle movement, output is accomplished of the contents main data of the contents data by the output device 400 of only the time of the linked data output time information from the date and time of the linked data output start information. Specifically, the audio data is vocally enunciated by the audio output unit 410. In addition, as shown, for example, in Fig. 5, there is sub display region 422 of the abbreviated rectangle shown by the hypothetical image lines in the lower right portion in the display region 421. In this instance, an example is provided concerning configuration which attaches the sub display region 422 in the lower right portion of the display region 421. However, the invention is not limited to this example, and other appropriate configuration may also be provided, such as configuration which attaches, for example, the sub display region 422 to one of two partitions of the display region 421. Also, in addition to continuing the display of map information relating to vehicle movement in the display region 421, video data is displayed on the sub display region 422. In this instance, the configuration may be such that the video data is displayed in the display region 421, and map information relating to movement may be displayed in the sub display region 422.

In addition, the output controller 320, in addition to the contents data, appropriately outputs the contents related map information with the output device 400. Specifically, the output controller 320, in a state set in the contents mode, if it is recognized to be set to the output control mode on the basis, for example, of the set location points, a determination is made as to whether there is correspondence between the linked data location point coordinates and the set location point coordinates. In this instance, if it is recognized to be set to the output control mode based on an external video, then a determination is made as to whether there is correspondence between the linked data location point coordinates and the external video image location point coordinates. Also, if there is recognized correspondence between the coordinates, then the synchronizing information of the program linked data at the time of recognition of the linked data location point coordinates is acquired. Furthermore, contents related map information corresponding to the linked data location point coordinates is also acquired from the related map acquirer 310. Also, the output controller 320, in a state in which there is continued output of the contents data, outputs the contents related map information by the output device 400 of only of the time of the linked data output time information from the date and time of the linked data output start information. Specifically, as shown, for example, in Fig. 6, in addition to continuing the display of the contents data by the display region 421, display is also accomplished of the contents related map information in the sub display region 422. In this instance, configuration may be such that the contents related map information is displayed in the display region 421, and the contents data is displayed in the sub display region 422.

Note that, the form in which the map information relating to vehicle movement, the contents data, or contents related map information is displayed, is not limited to the form shown in Fig. 5 or Fig. 6, and may be other appropriate forms.

### [Operation of Navigation System]

An explanation of the operation of the navigation system 100 is provided hereafter, with reference to the drawings.

### (Processing in Output Control Mode based on Set Location Points)

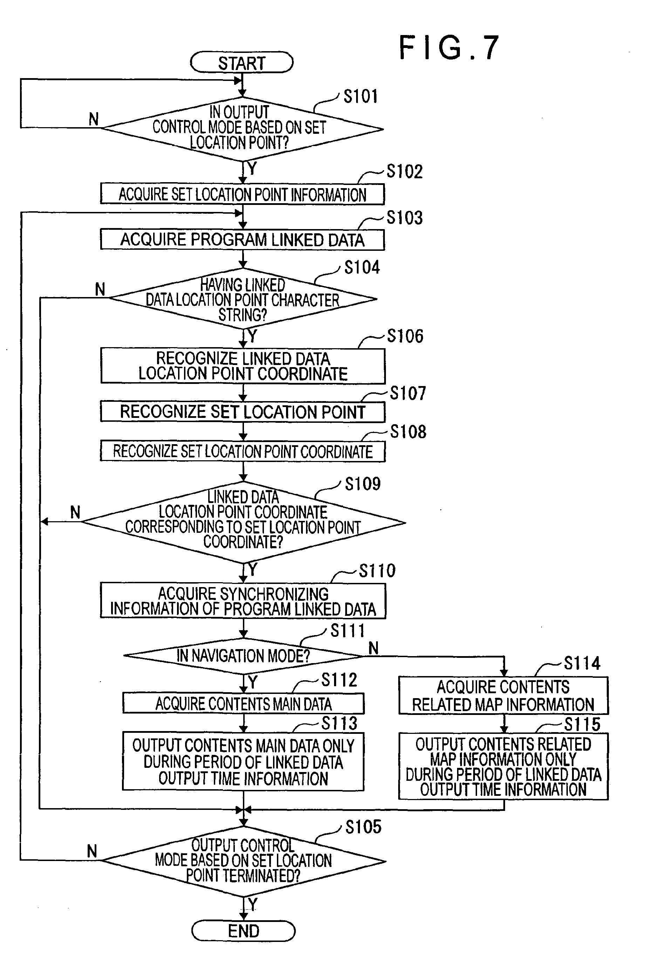

In Fig. 7, an explanation is provided of the processing in the output control mode based on set location points as the operation of the navigation system 100. Fig. 7 is a flowchart which shows processing in the output control mode based on set location points.

First of all, the user, in a state in which processing is executed based on the navigation mode or contents mode in the navigation device 200, inputs setting to the output control mode based on the set location points by the input of the input unit 240. If the navigation device 200, as shown in Fig. 7, recognizes, by the output controller 320 of the processor 270, the set input of being set to the output control mode based on set location points (step S101), encouraging the set input of the set location point information is output by the output device 400. Subsequently, the user appropriately sets and inputs set location point information with the input of the input unit 240. The processor 270 of the navigation device 200 acquires, by the set location point coordinate recognizer 302, the set input set location point information (step S102). Furthermore, the processor 270, by the linked data location point coordinate recognizer 301, acquires program linked data of the contents data selected by the user from the contents processor 290 (step S103). In this instance, the linked data location point coordinate recognizer 301, in the case of being set to the navigation mode, acquires the program linked data of contents data pre-selected by the user, and in the case of being set to the contents mode, acquires program linked data of the contents data output by the output device 400 by the output controller 320. Also, the linked data location point coordinate recognizer 301 determines, whether the contents data of the program linked data has a linked data location point character string (step S104).

In step S104, if the processor 270 determines, by the linked data location point coordinate recognizer 301, that there is no linked data location point character string, then by the output controller 320, a determination is made as to whether there is recognized set input of terminating the output control mode based on the set location points (step S105). Also, in step S105, if it is determined that there is recognition of the set input of terminating the output control mode based on the set location points, then processing is terminated. On the other hand, in step S105, if the output controller 320 determines there is no recognized set input of terminating the output control mode based on the set location points, the program returns to step S103.

In addition, in step S104, if it is determined that the linked data location point coordinate recognizer 301 recognizes there is the linked data location point character string, then linked data location point coordinates are recognized as corresponding to the linked data location point character string, based on the location point character string corresponding coordinate information stored in the storage 250 (step S106). Subsequently, the processor 270 recognizes set location points based on the set location point information acquired in step S102, by using the set location point coordinate recognizer 302 (step S107). Also, the set location point coordinate recognizer 302 recognizes the set location point coordinates corresponding to the set location points based on map information and the like (step S108). Subsequently, the processor 270 determines whether there is correspondence between the linked data location point coordinates and the set location point coordinates, using the output controller 320 (step S109).

In step S109, if it is determined that there is no correspondence between the linked data location point coordinates and the set location point coordinates, then the process described in step S105 is executed. On the other hand, in step S109, if the output controller 320 determines there to be correspondence between the linked data location point coordinates and the set location point coordinates, then the synchronizing information of program linked data used at the time of recognition of the linked data location point coordinates is acquired (step S110). Also, the output controller 320 determines whether it is set to the navigation mode (step S111). In step S111, if it is determined to be set to the navigation mode, then contents data which includes program linked data is acquired from the contents processor 290 (step S112). Also, the output controller 320, as shown, for example, in Fig. 5, in a state in which there is continued output of map information relating to vehicle movement, outputs the contents main data of the contents data by the output device 400 of only the time of the linked data output time information from the date and time of the linked data output start information of the synchronizing information (step S113), and the processing described in step S105 is executed.

On the other hand, in step S111, if the processor 270 recognizes that it is set by the output controller 320 to the contents mode and not to the navigation mode, then contents related map information corresponding to the linked data location point coordinates is acquired, by the related map acquirer 310 (step S114). Also, the output controller 320, as shown, for example, by Fig. 6, in a state in which there is continuous output of the contents data, outputs the contents related map information, by the output device 400, for only the time of the linked data output time information from the date and time of the linked data output start information (step S115), and the processing described in step S105 is executed.

### (Processing in Output Control Mode based on External Video Image)

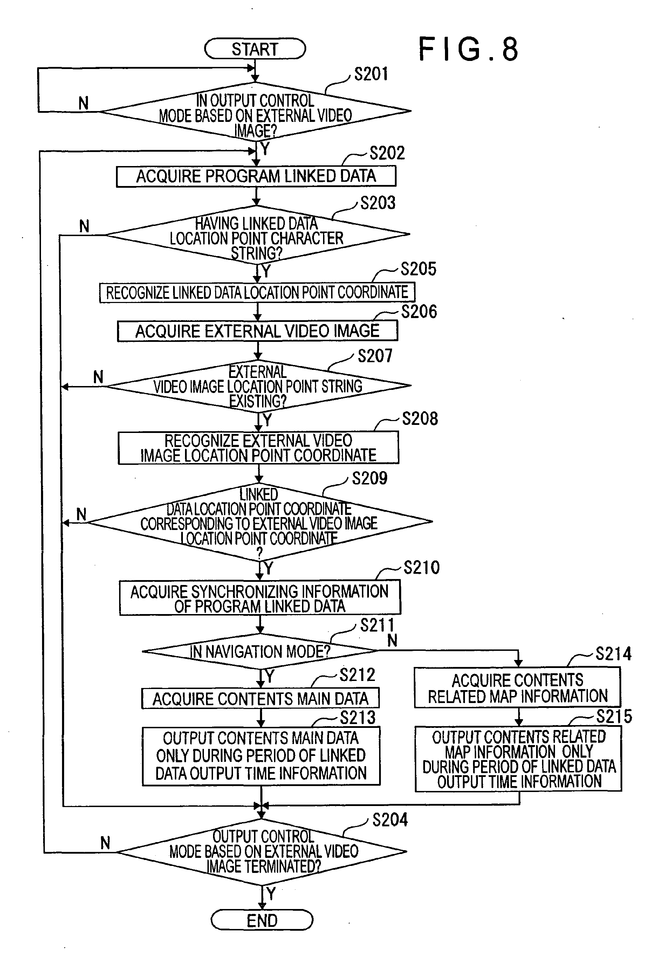

As the operation of the navigation system 100, an explanation is provided next of processing in the output control mode based on an external video image, with reference to Fig. 8. Note that, the explanation of the same processing as the processing in the output control mode based on set location points, is abbreviated. Fig. 8 is a flowchart which shows processing in the output control mode based on an external video image.

First of all, the user, in a state in which processing is executed based on the navigation mode or the control mode in the navigation device 200, by the input of the input unit 240, accomplishes set input of setting to the output control mode based on an external video image. If the navigation device 200, as shown in Fig. 8, recognizes the set input of being set to the output control mode based on an external video image by the output controller 320 of the processor 270, then program linked data (step S202) of the contents data selected by the user is acquired with the linked data location point coordinate recognizer 301 (step S201). In this instance, if the linked data location point coordinate recognizer 301 is set to the navigation mode, then the program linked data of the contents data pre-selected by the user is acquired, and if it is set to the contents mode, then program linked data of the contents data output by the output device 400 is acquired with the output controller 320. Also, the linked data location point coordinate recognizer 301 determines if the contents data of the program linked data contains a linked data location point character string (step S203).

In step S203, if the processor 270 determines, by the linked data location point coordinate recognizer 301, that there is no linked data location point character string, then a determination is made by the output controller 320, if there is a recognized set input of terminating the output control mode based on an external video image (step S204). Also, in step S204, if it is determined that there is recognition of the set input of terminating the output control mode based on an external video image, then processing is terminated. On the other hand, in step S204, in the case that the output controller 320 is determined not to recognize the set input of terminating the output control mode based on an external video image, the program returns to step S202.

On the other hand, in step S203, if the linked data location point coordinate recognizer 301 determines there to be a linked data location point character string, then linked data location point coordinates corresponding to the linked data location point character string are recognized (step S205). Subsequently, the processor 270 appropriately controls the operation of the image pickup unit 500 using the external video image location point coordinate recognizer 303, and the external video image is photographed. Also, the external video image location point coordinate recognizer 303 acquires the external video image photographed by the image pickup unit 500 (step S206), and a determination is made as to whether there is an external video image location point character string in the external video image (step S 207).

In step S207, if there is determined to be no external video image location point character string, then the processing described in step S204 is executed. On the other hand, if in step S207, the external video image location point coordinate recognizer 303 determines there to be an external video image location point character string, then external video image location point coordinates corresponding to the external video image location point character string are recognized, based on the location point character string corresponding coordinate information stored in the storage 250 (step S208). Subsequently, the processor 270 determines if there is correspondence between the linked data location point coordinates and the external video image location point coordinates by the output controller 320 (step S209).

In step S209, if it is determined that there is no correspondence between the linked data location point coordinates and the external video image location point coordinates, then the processing described in step S204 is executed. On the other hand, in step S209, in the case that the output controller 320 determines that there is correspondence between the linked data location point coordinates and the external video image location point coordinates, then synchronizing information of the program linked data used at the time of recognition of the linked data location point coordinates is acquired (step S210). Also, the output controller 320 determines whether it is set to the navigation mode (step S211). In step S211, if it is determined to be set to the navigation mode, then contents data of contents data which has the program linked data is acquired (step S212), and, for example, as shown in Fig. 5, the contents main data of the contents data is output by the output device 400 as only the time of the linked data output time information from the date and time of the linked data output start information of the synchronizing information (step S213), and the process described in step S204 is executed.

On the other hand, in step S211, if the processor 270 determines that it is set in the contents mode by the output controllers 320, then contents related map information corresponding to the linked data location point coordinates is acquired by the related map acquirer 310 (step S214). The output controller 320, as shown, for example, in Fig. 6, outputs the contents related map information with the output device 400, for only the time of the linked data output time information from the date and time of the linked data output start information (step S215), and executes the process described in step S204.

### [Effects of First Embodiment]

As indicated above, in the above embodiment, if the processor 270 of the navigation device 200 recognizes the set input of being set to the contents mode by the output controller 320, then contents data is acquired from the contents processor 290, and displayed by the display 420 of the output device 400. Subsequently, if the processor 270 recognizes being set input in being set to the output control mode on the basis, for example, of the set location points, by the output controller 320, then program linked data of the contents data output by the output device 400 is acquired by the linked data location point coordinate recognizer 301. Also, if the processor 270 recognizes, by the linked data location point coordinate recognizer 301, that the contents data of the program linked data has a character string of location point character string information, then by the related map acquirer 310, map information corresponding to the location points shown by the character string is acquired as contents related map information. Subsequently, the output controller 320 displays the contents related map information with the display 420 of the output device 400.

Owing to this, if the navigation device 200, in the state in which a selected program is output, acquires the program linked data corresponding to the scene relating to a specific location point, the contents related map information corresponding to specific location points can be displayed by the display 420 of the output device 400. Therefore, the navigation device 200 can make known to the user, for example, location points relating to a specific scene of the program displayed by the display 420 according to the contents related map information. Hence, the navigation device 200 can appropriately output various pieces of information.

The output controller 320 displays the contents related map information on the sub display region 422 of the lower right portion of the display region 421 which displays the contents data. Owing to this, the user can view the contents related map information without diverting his attention from the contents data. Therefore, the navigation device 200 can more appropriately output various pieces of information.

Map information has information relating to the absolute coordinates ZP. Also, the related map acquirer 310 acquires map information which has information corresponding to the coordinates of location points shown by the character string of the location point character string information as contents related map information. Owing to this, the related map acquirer 310 is able to specify contents related map information based on the information of the absolute coordinates ZP for which the amount of information is small in comparison with information relating to the character string. Therefore, the related map acquirer 310 can easily specify the contents related map information.

The map information which has information of the absolute coordinates ZP is stored in the map information storage region of the storage 250. In addition, in the correspondence coordinate information storage region of the storage 250, location point character string information relating to character strings which show specific location points; and corresponding coordinate information relating to the coordinates of the map information of the location points shown by the location point character string information are stored as single data structure to store the location point character string correspondent coordinate information. Also, the linked data location point coordinate recognizer 301 searches the character strings of the location point character string information from the contents data, and recognizes the coordinates of the corresponding coordinate information corresponding to the location point character string information of the searched character strings as the linked data location point coordinates. Subsequently, the related map acquirer 310 acquires map information which has the information of the absolute coordinates ZP corresponding to the linked data location point coordinates as the contents related map information. Owing to this, since the contents related map information is specified using location point character string corresponding coordinate information, the information quantity of which is small in comparison with the map information, update of the location point character string corresponding coordinate information is easy in comparison with the map information. Furthermore, the navigation device 200 can be easily updated in a state corresponding to the most recent state.

The output controller 320 outputs the contents related map information for only the time of the linked data output time information from the date and time of the linked data output start information. Owing to this, the navigation device 200, in addition to the output start of, for example, a scene relating to a specified region, starts the output of the contents related map information, and in addition to the termination of the output of the scene, the output of contents related map information can also be terminated. Furthermore, the navigation device 200 appropriately further outputs various pieces of information.

If the processor 270 recognizes the set input set in the output control mode on the basis, for example, of the set location points set by the output controller 320, the input set location point information is acquired by the user with the set location point coordinate recognizer 302. Also, the set location point coordinate recognizer 302 recognizes the set location point i.e. the specified location point based on various information relating to vehicle movement, based on set location point information. Subsequently, if the set location point coordinate recognizer 302 recognizes, for example, the location points within a radius of 1 kilometer, for example, from the current-position, then the current-position information is acquired from the current-position recognizer 281, and the location points corresponding to the set location points are specified. Also, if the output controller 320 recognizes that the contents data corresponding to the contents data shown by the display 420 of the output device 400 has a character string which shows the location points corresponding to the set location points, then the contents related map information is displayed. Owing to this, the navigation device 200, in a state in which arbitrary programs are displayed, acquires, for example, program linked data corresponding to the scene related to the location points within a radius of 1 kilometer from the current-position of the vehicle, and is able to display contents related map information corresponding to the location points. Therefore, the navigation device 200 is able to display the contents related map information of the set location points corresponding to vehicle movement, and to further appropriately output various pieces of information.

The external video image location point coordinate recognizer 303 acquires the external video image photographed by the image pickup unit 500, and recognizes the character string present in the external video image. Also, if the output controller 320, in the contents mode, recognizes that the contents data of the contents output by the output device 400 has a character string corresponding to the character string of the external video image, then the contents related map information corresponding to the location point shown by the character string of the contents data is displayed. Owing to this, the navigation device 200, in a state in which an arbitrary program is output, acquires program linked data corresponding to the scene relating to the location points shown in, for example, billboards present in the external video image, and is able to display the contents related map information corresponding to the location points. Therefore, the navigation device 200 is able to display contents related map information of location points shown by the character string of an outwardly present forward billboard and the like, and various pieces of information can be further appropriately output.

If the processor 270 of the navigation device 200 recognizes the set input of the essence set in the navigation mode by the output controller, then map information relating to vehicle movement is acquired from the navigation processor 280, and is displayed by the display 420 of the output device 400. Subsequently, if the processor 270 recognizes the set input of the essence set in the output control mode based on, for example, the location points set by the output controller 320, then the set location point information is acquired by the set location point coordinate recognizer 302. Also, if the set location point coordinate recognizer 302 recognizes the set location points based on the set location point information, then appropriate acquisition is accomplished of various pieces of information relating to movement from the navigation processor 280, and the location point corresponding to the set location point is specified. In addition, the processor 270 acquires the program linked data of the contents pre-selected by the user, by the linked data location point coordinate recognizer 301. Also, if the processor 270 recognizes that the contents data of the program linked data has a character string showing the location points corresponding to set location points, by the linked data location point coordinate recognizer 301, then contents main data corresponding to the program linked data, in other words, corresponding to the set location points is acquired, by the output controller 320. Subsequently, the output controller 320 displays the contents main data by the display 420 of the output device 400.

Owing to this, if the navigation device 200, in a state in which map information relating to vehicle movement is displayed by the display 420 of the output device 400, for example, acquires program linked data corresponding to the scene relating to the location points within a radius of 1 kilometer from the current-position of the vehicle, then the scene relating to the location points can be displayed by the display 420. Furthermore, the navigation device 200 is able to provide visual recognition to the user of particular information in the location points of the map information displayed by the display 420, from the contents main data. Hence, the navigation device 200 can appropriately output various pieces of information.

The output controller 320 displays the contents main data corresponding to the set location points in the sub display region 422 of the lower right portion of the display region 421 which shows map information relating to vehicle movement. Owing to this, the user can view the contents main data corresponding to the set location points, without diverting his/her attention from the display of map information relating to vehicle movement. Therefore, the navigation device 200 can more appropriately output various pieces of information.

The output controller 320 outputs the contents main data corresponding to the set location points only for the time of the linked data output time information from the date and time of the linked data output start information of the synchronizing information. Owing to this, the navigation device 200 can surely outputs from the start to the end of the scene relating to the set location points along which vehicle moves. Therefore, the navigation device 200 can more appropriately output various pieces of information.

If the output controller 320, in the navigation mode, recognizes that contents data of the contents selected by the user includes the character string corresponding to the character string of the external video image photographed by the image pickup unit 500, then the contents main data corresponding to the contents data is displayed. Owing to this, the navigation device 200, in a state in which map information relating to the vehicle movement is displayed, acquires program linked data corresponding to the scene relating to the location points shown, for example, on a forward billboard present in the external video image, and the scene can be displayed. Therefore, the navigation device 200 can display the scene of a program relating to location points shown by the character string of an external billboard, and various pieces of information can be further appropriately output.

### [Second Embodiment]

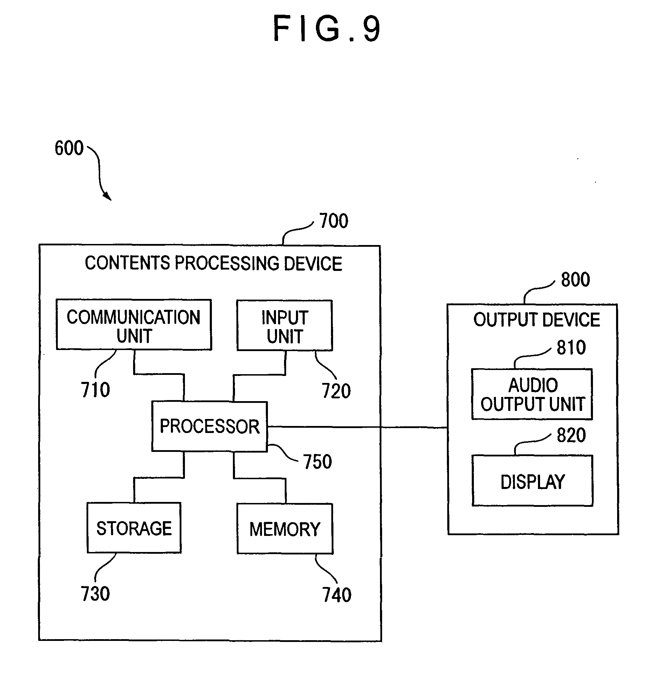

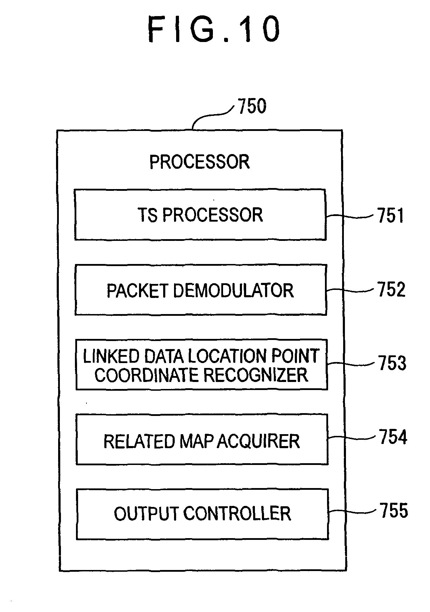

An explanation of a second embodiment of the present invention is provided hereafter, with reference to the drawings. The second embodiment is a contents processing system provided with a contents processing device which has the output control device of the present invention, and explains examples of configuration in which the contents of television programs transmitted with broadcast waves are output. In addition, an explanation is provided of examples in which audio data or video data corresponding to the specific scene of the contents and program data, explained hereafter, linked to the specific scene are synchronized and output. In configuration which is the same as the first embodiment, the explanation is abbreviated and simplified. Fig. 9 is a block diagram showing the brief configuration of the contents processing system. Fig. 10 is a block diagram showing the brief configuration of the processor which constitutes the contents processing device.

### [Construction of Contents Processing System]

In Fig. 9, 600 represents the contents processing system. The contents processing system 600 is a system which acquires and outputs, for example, the contents of television programs. Also, the contents processing system 600 has a contents processing device 700, and an output device 800 used as an output unit, and an unshown map information storage device.

The output device 800 has the same configuration as the output device 400 of the first embodiment. The output device 800 receives and outputs map information or contents data input from the contents processing device 700. Also, the output device 800 has an audio output unit 810 and a display 820 as a display unit. The audio output unit 810 outputs audio data transmitted as audio signals from the contents processing device 700, as audio by the audio generator. The display 820 displays image data transmitted as image signals from the contents processing device 700.

The map information storage device is connected to the contents processing device 700 through an unshown network. The map information storage device stores map information which has display data VM such as that shown in Fig. 2. Also, the map information storage device may be a drive or driver which readably stores map information to a recording medium, e.g. magnetic disk such as a HD, the optical disk such as a DVD, and a memory card.

The contents processing device 700 acquires contents data having audio data, video data, and data for data broadcasts distributed as TS and output the data by the output device 800. In addition, along with the contents data, appropriate output is accomplished of contents related map information related to the contents data. Also, the contents processing device 700 has a communication unit 710, an input unit 720, a storage 730, a memory 740, a processor 750 used as a computing unit, and the like.

The communication unit 710 appropriately acquires TS format information input from an external unit and map information. Also, the communication unit 710 has an unshown TS receiver, an interface, and the like. The TS receiver is connected to an unshown TS antenna, and acquires TS selected by the user and transmitted as digital signals from the TS antenna, by the control of the processor 750, and outputs it as TS signals to the processor 750. The interface employs, for example, the IEEE (Institute of Electrical And Electronic Engineers) 1394 standard interface capable of high-speed data processing. The interface is connected to a map information storage device through a network. Also, the interface appropriately acquires map information from the map information storage device, and outputs it as map information signals to the processor 750.

The input unit 720 has various unshown operating buttons or switch arranged to be input operation capable which, for example, faces the front of a case. As the contents of the input operating button or switch, for example, there are items for setting the operating contents of the contents processing device 700. Specifically, examples are provided of setting the TS received by the communication unit 710, and setting the contents related map output mode i.e. the mode which outputs the contents related map information. Also, the input unit 720, by the input operation of the setting items outputs and sets various pieces of information to the processor 750 as an operating signal. Note that, as the input unit 720, examples may be cited of configurations for setting various set items such as an input operation accomplished via a touch panel, a vocal input operation or the like. In addition, configuration may also be provided in which various pieces of information transmitted through an unshown infrared beam by a remote controller is output and set to the processor 750 as an operating signal.

The storage 730 readably stores unshown location point character string corresponding coordinate information. The location point character string corresponding coordinate information is the same information as the location point character string corresponding coordinate information stored in the storage 250 of the first embodiment. Also, the storage 730 may be a drive and driver which readably stores to each type of recording medium, e.g. a magnetic disk such as an HD, an optical disk such as a DVD, and a memory card.

The memory 740 readably stores set items input by the input unit 720, and various pieces of information generated and obtained by the processor 750. In addition, each type of program is stored, which runs on an OS for controlling the entire processing device 700. As the memory 740, desirable use may be made of configuration which also preserves recordings made at the time of a sudden drop in electric power caused by a blackout, in such as, for example, CMOS memory. Note that, the memory 740 may also be a drive or driver which readably stores to the storage medium such as an HD, a DVD, an optical disk and the like.

The processor 750 has each type of unshown input and output port, such as, for example, an output control port is connected to the output device 800, a TS reception port connected to a TS antenna, an interface port connected to an interface, a key input port connected to the input unit 720, a storage port connected to the storage 730, and a memory port connected to the memory 740. Also, the processor 750, as each type of program, has an unshown TS processor 751, a packet demodulator 752, a linked data location point coordinate recognizer 753 which also functions as a contents data acquirer and a searching section, a related map acquirer 754 as a map information acquirer, a program data acquirer, a distribution date and time information acquirer, and an output controller 755 which also functions as a display controller, and the like as shown in Fig. 10. Note that, the output control device of the present invention is constituted of the linked data location point coordinate recognizer 753, the related map acquirer 754, and the output controller 755.

The TS processor 751 separates TS packets into which contents data selected by the user from the TS acquired by the TS receiver have been incorporated. Also, the separated TS packets are appropriately output to the packet demodulator 752.

The packet demodulator 752 appropriately acquires the TS packet from the TS processor 751. Also, the contents data incorporated into the TS packet are demodulated , and appropriately output to the output controller 755. In addition, the demodulated program linked data is appropriately output to the linked data location point coordinate recognizer 753.

The linked data location point coordinate recognizer 753 acquires program linked data from the packet demodulator 752. Also, after searching the character strings of location point character string information stored in the storage 730 from the contents data of the program linked data, recognition is accomplished of the coordinates of corresponding coordinate information corresponding to the searched location point character string information, as linked data location point coordinates.

The related map acquirer 754 searches map information which has linked data location point coordinates recognized by the linked data location point coordinate recognizer 753, from the map information storage device, through a network.

The output controller 755, along with the contents data, appropriately outputs contents related map information by the output device 800. Specifically, the output controller 755, in a state in which the contents data are output from the output device 800, if it recognizes there to be a setting to the contents related map output mode, then linked data output time information is acquired from the program linked data used at the time of recognition of the linked data location point coordinates in the linked data location point coordinate recognizer 753. In addition, contents related map information corresponding to the linked data location point coordinates is acquired from the related map acquirer 754. Also, the output controller 755, in a state in which the output of the contents data is continued, outputs contents related map information by the output device 800 relating to only for the time of the linked data output time information. Specifically, as shown, for example, in Fig. 6, in addition to continuing to display of the contents data by a display region 821, contents related map information is also displayed by a sub display region 822.

### (Operation of Contents Processing System)

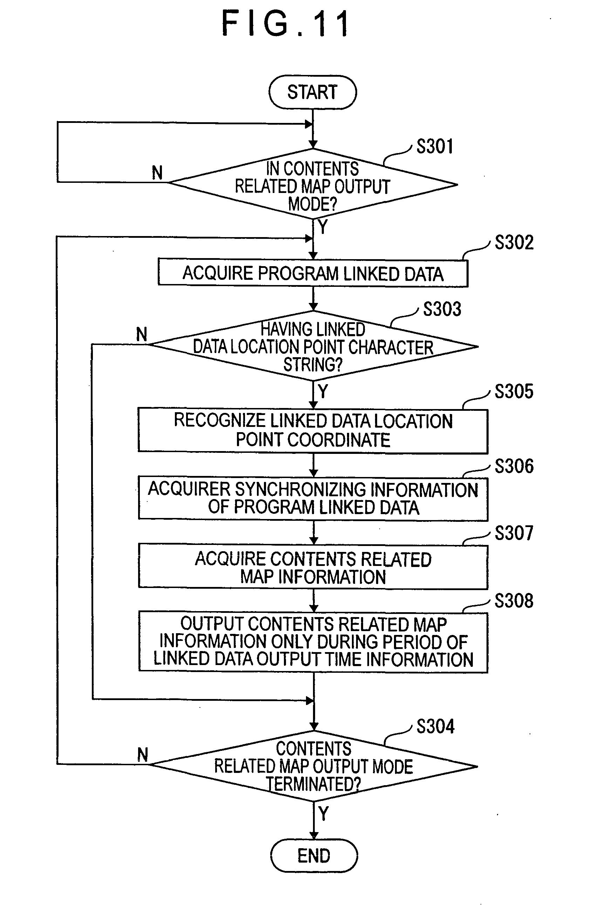

Next, as the operation of the contents processing system 600, an explanation is provided based on Fig. 11 in relation to processing when in the contents related map output mode. Fig. 11 is a flowchart which shows processing in the contents related map output mode.

First of all, the user, in a state in which contents data is output corresponding to the desired contents of the contents processing device 700, accomplishes set input of setting to the contents related map output mode, by the input operation of the input unit 720. The contents processing device 700, as shown in Fig. 11, when the set input is recognized of being set to the contents related map output mode by the output controller 755 of the processor 750 (step S301), then program related data of the program related data of the contents data obtained from the packet demodulator 752 is acquired by the linked data location point coordinate recognizer 753 (step S302). Also, the linked data location point coordinate recognizer 753 determines whether the contents data of the program linked data has a linked data location point character string (step S303).

In step S303, when the processor 750 determines, by the linked data location point coordinate recognizer 753 that there is no linked data location point character string, then, by the output controller 755, a determination is made as to whether there is a recognized set input of terminating the contents related map output mode (step S304). In step S304, if the set input of completing the contents related map output mode is recognized, then processing is terminated. On the other hand, in step S304, if the output controller 755 is determined to not recognize the set input of completing the contents related map output mode, then the program returns to step S302.

In addition, in step S303, if the linked data location point coordinate recognizer 753 determines there to be a linked data location point character string, then linked data location point coordinates corresponding to the linked data location point character string are recognized (step S305). Also, the output controller 755 acquires the synchronizing information of program linked data used at the time of recognition of the linked data location point coordinates (step S306). Subsequently, the processor 750 acquires contents related map information corresponding to the linked data location point coordinates obtained from the map information storage device (step S307). Also, the output controller 755, for example, as shown in Fig. 6, in a state in which the output of the contents data is continued, outputs the contents related map information by the display 820 of the output device 800 of only the time of the linked data output time information obtained from the date and time of the linked data output start information of the synchronizing information (step S308), and the processing in step S304 is executed.

### (Effects of Second Embodiment)

As described above, in the above embodiment, the processor 750 of the contents processing device 700 acquires contents data from the packet demodulator 752, by the output controller 755, and displays it with the display 820 of the output device 800. Subsequently, if the processor 750 recognizes the set input of being set to the contents related map output mode by the output controller 755, then program linked data of the contents data output by the output device 800 is acquired by the linked data location point coordinate recognizer 753. Also, if the processor 750 recognizes, by the linked data location point coordinate recognizer 753, that the contents data of the program linked data has a character string of location point character string information, then map information corresponding to the location points shown by the character string is acquired as contents related map information. Subsequently, the output controller 755 displays the contents related map information on the display 820 of the output device 800.

Owing to this, when the contents processing device 700, in a state in which arbitrary programs are output, acquires program linked data corresponding to the scene relating to specified location points, and the contents related map information corresponding to the specified location points can be displayed by the display 820 of the output device 800. Therefore, the contents processing device 700 is able to provide recognition to the user of location points related, for example, to the specific scene of a program, by the contents related map information. Hence, the contents processing device 700 can appropriately output various pieces of information.

The output controller 755 displays contents related map information in the sub display region 822 of the lower right portion of the display region 821 which displays the contents data. Owing to this, the contents processing device 700 can provide visual recognition of the contents related map information without diverting the users attention from the contents data, and various pieces of information can be more appropriately output.

The related map acquirer 754 acquires map information which has information corresponding to the location point coordinates shown in the character string of the location point character string information, as contents related map information. Owing to this, the related map acquirer 754 is able to specify contents related map information based on the absolute coordinates ZP for which the amount of information is small in comparison with the information relating to character strings, and the contents related map information can be easily specified.

The linked data location point coordinate recognizer 753 recognizes linked data location point coordinates based on the location point character string corresponding coordinate information stored in the storage 730. Also, the related map acquirer 754 specifies contents related map information based on the linked data location point coordinates. Owing to this, since the contents related map information is specified using the location point character string corresponding coordinate information for which the amount of information is small in comparison with map information, the location point character string corresponding coordinate information can be easily updated in compared with the map information, and update of the contents processing device 700 can be easily accomplished in a state corresponding to the most recent condition.

The output controller 755 outputs the contents related map information for only the time of the linked data output time information obtained from the date and time of the linked data output start information of the synchronizing information. Owing to this, the contents processing device 700 starts the output of the contents related map information along with the output start of a scene relating to a specified region, and is able to terminate the output of the contents related map information along with termination of the output of the scene, appropriately further outputting various pieces of information.

### [Modification of Embodiment]

Note that, the present invention is not limited to the above embodiment, but includes modifications described hereafter as long as the object of the present invention can be achieved.

Examples have been provided of configuration in which, with the output controllers 320 and 755, in a state in which the display of the contents data is continuous, contents related map information is displayed. However, configuration may also be provided in which only contents related map information is displayed, and in which the display of contents data is cut off. With this type of configuration, the navigation device 200 or the contents processing device 700 can provide recognition of the contents related map information to the user in compared with the configuration that simultaneously display the contents data and the contents related map information,. Therefore, the navigation device 200 or the contents processing device 700 can further appropriately output various pieces of information.

An example is provided concerning configuration wherein, by the output controller 320, the contents main data corresponding to the set location point in a state in which there is continuous display of map information relating to vehicle movement is displayed. However, configuration may also be provided in which the display of the map information relating to movement is cut off, and in which display is accomplished of only the contents main data. According to this type of configuration, in comparison with configuration in which the navigation device 200 simultaneously displays map information and contents data relating to a moving vehicle, visual recognition of the contents data can be easily provided to the user. Furthermore, the navigation device 200 can further appropriately output various pieces of information.

An example has been provided of configuration which recognizes linked data location point coordinates based on location point character string corresponding coordinate information, using the linked data location point coordinate recognizer 301 and 753. However, the configuration is not limited to this example, and configuration described in the following examples may also be used. In other words, for example, the name information VMxA of the display data VM may function as map location point character data of the present invention. Also, configuration may also be used in which, with the linked data location point coordinate recognizer 301, and 753, searching is accomplished of the name information VMxA which has the character string of the contents data obtained from the map information, and map information corresponding to the searched name information VMxA is acquired as the contents related map information. According to this configuration, there is no need to store location point character string corresponding coordinate information in the storages 250 and 730. Therefore, the capacity of the storages 250 and 730 can be made smaller, reducing the cost of the navigation device 200, and the contents processing device 700.

An example has been provided of configuration in which, with the output controllers 320 and 755, the contents main data corresponding to the contents related map information or set location points displays for only the time of linked data output time information obtained from the date and time of the linked data output start information. However, the configuration is not limited to this, and configuration may also be utilized such as that described below. In other words, configuration may also be used in which the displays are terminated by the output controllers 320 and 755, as the time of recognizing that a specified or greater time has elapsed since the start of the display of the contents main data corresponding to the contents related map information or set location points. According to this type of configuration, there is no need to attach a function for recognizing linked data output time information to the output controllers 320 and 755. Therefore, the configuration of the output controllers 320 and 755 may be simplified, reducing the cost of the navigation device 200 or the contents processing device 700.

In addition, configuration may also be provided in which display is terminated by the output controllers 320 and 755, when there is recognition of map display termination information which in essence terminates the display of contents related map information, or recognition of set input of the data display termination information which in essence terminates the display of contents main data corresponding to the set location points. With such configuration, the user can appropriately accomplish forced termination of the contents main data display corresponding to contents related map information or set location points. Therefore, an improvement can be made of the convenience of use of the navigation device 200 or the contents processing device 700.

An example has been provided of configuration in which, by the output controllers 320 and 755, contents main data corresponding to the contents related map information or set location points are displayed by the sub display regions 422 and 822. However, configuration is not limited to this, and, for example, configuration may be used such as that which is described below. For example, using the output controllers 320 and 755, display can be accomplished, for example, of a related map display icons used as the map associated information which is associated with the contents related map information. A configuration may also be used in which, at the time of recognition of a set input of map display selection information which in essence selects the related map display icons, the contents related map information is displayed in the sub display regions 422 and 822 or in the unshown related map display region. In addition, configuration may also be used in which in displaying contents display icons as program associated information which is associated with the contents main data corresponding to set location points, when there is a recognized set input of contents display selection information, which selects a contents display icon, display being accomplished of the contents main data corresponding to the set location points in the sub display regions 422 and 822 or an unshown contents data display region. According to these configurations, a user can accomplish display of contents main data corresponding to contents related map information or set location points at appropriate timing. Therefore, further improvement can be accomplished in the convenience of use of the navigation device 200 or the contents processing device 700.

A map associated information acquirer is attached to the processors 270 and 750 which acquires map related information relating to location points corresponding to map information, such as, for example, information relating to events or outlets. Also, configuration may also be provided in which, by the output controllers 320 and 755, map associated information is displayed relating to the location points of contents related map information. According to such configuration, the navigation device 200 or the contents processing device 700 is able to display a greater amount of information corresponding to the scene displayed by the display 420 in comparison with the configuration of the above embodiment. Therefore, the navigation device 200 or the contents processing device 700 can further appropriately output various pieces of information.

An explanation has been provided of configuration which attaches a function to the navigation device 200 which outputs contents main data corresponding to contents related map information and set location points. However, the configuration is not limited to this, and configuration may be provided which provides another function. According to this type of configuration, the composition of the output controller 320 can be simplified, and the cost of the navigation device 200 can be greatly reduced.

The output controller 320 functions as the contents data output controller of the present invention, and the output device 400 functions as the contents data output section of the present invention, respectively. Also, configuration may also be provided in which, by the output controller 320, in addition to the contents main data corresponding to set location points, program linked data may be output by the output device 400. According to this type of configuration, the navigation device 200 is able to output a greater amount of information in comparison with configuration which outputs only the contents main data. Therefore, the navigation device 200 is able to more appropriately output various pieces of information.

Construction may also be provided in which when it is recognized by the output controller 320 that there is a character string in which the program non-linked data of the contents main data selected by the user shows set location points, in addition to the map information relating to movement, the program non-linked data corresponding to the set location points is output. In addition, configuration may also be provided in which, when it is recognized that there is a character string in which data for outputting commercials show set location points, and output is accomplished of a commercial corresponding to the set location points. According to such configurations, the navigation device 200, in addition to outputting contents main data corresponding to the set location points, also outputs the program non-linked data or the commercials. Thus, the navigation device 200 can further appropriately output various pieces of information.

An explanation has been provided of an example of configuration in which, when it is recognized that a character string residing in an external video image photographed by the image pickup unit 500 is contained in the contents data, a function is attached which, for example, outputs contents related map information corresponding to the location points shown by the contents data character string. However configuration may also be provided in which such a function is not attached. This type of configuration eliminates the need for attaching the image pickup unit 500 to the navigation system 100. Furthermore, the need for attaching external video image location point coordinate recognizer 303 to the navigation device 200 is also eliminated. Thus, the configuration of the navigation system 100 or that of the navigation device 200 can be simplified, thereby reducing their cost.

Functionality can be provided wherein the current-position recognizer 281 functions as the current-position information acquirer of the present invention; the route processor 283 functions as the route searching section of the present invention; the output controller 320 functions as the route output controller; and the output device 400 functions as the route output unit of the present invention, respectively. Also, a travel route from the current vehicle position to the location point of the location point character string information held by the contents character data is set by the route processor 283. Furthermore, configuration may also be provided in which the travel route set by the output controller 320 is output by the output device 400. According to this type of configuration, the navigation device 200 is able to provide notification to the user of a travel route extending to location points relating to the specific scene of a selected program, enabling improved convenience of use of the navigation device 200.

A configuration may also be provided which, in addition to attaching the contents main data of a scene relating to a specific location point to the processors 270 and 750, also attaches a storage controller which stores contents related map information corresponding to the specified location points in the storages 250 and 730. In addition, configuration may also be provided which attaches a storage controller to the processor 270 which, in addition to map information, stores the contents main data of a scene relating to the arbitrary location points of the map information, in the storage 250. According to this type of configuration, in addition to providing visual recognition to the user of the scene relating to specific location points, map information corresponding to the specific location points can be provided at appropriate timing. Accordingly, the convenience of use of the navigation device 200 or the contents processing device 700 can be greatly improved.

In configuration which attaches the storage controller, functionality may be provided in which the output controller 320 functions as the map correspondent program output controller of the present invention; and the output device 400 functions as the map correspondent program output section of the present invention. Furthermore, to the processor 270 is attached a map correspondent program acquirer which searches, for example, map information relating to the travel route set by the route processor 283 displayed by the display 420, from the storage 250, and in addition to search map information, acquires the stored contents main data. Also, configuration may be provided which, by the output controller 320, outputs the contents main data acquired by the map correspondent program acquirer, by the output device 400. According to such configuration, the navigation device 200, even if in a time band, for example, in which the scene relating to the location points of a travel route displayed by the display 420 is not being broadcast, the contents main data of the scene can be appropriately acquired from the storage 250, and output by the output device 400. Thus, improved convenience of use of the navigation device 200 can also be achieved.

In configuration which attaches a storage controller such as that described above, functionality may be respectively provided in which the output controller 320 functions as the current-position correspondent program output controller of the present invention; and in which the output device 400 functions as the current-position correspondent program output section. Furthermore, attaching a current-position correspondent program acquirer to the processor 270, which searches map information which includes the current-position of current-position information from the storage 250, and acquires the contents main data stored together with the map information. Also, configuration may also be provided in which, using the output controller 320, the contents main data acquired by the current-position correspondent program acquirer is output by the output device 400. According to this type of configuration, the navigation device 200, even in a time band in which scene relating to the current-position is not being broadcasted, can appropriately acquire the contents main data of the scene from the storage 250, and output it with the output device 400. Thus, the user convenience of the navigation device 200 can be greatly improved.

An example is provided of configuration in which the output control device of the present invention is applied to the navigation device 200 or the contents processing device 700 which outputs the contents data. However configuration is not limited to this example, and, for example, as data, use may be made of, other than TV broadcast programs, radio broadcast programs, satellite broadcast programs, and as a further objects, video data distributed through a network. In addition, the storage 250; the contents processor 290; the location point coordinate recognition processor 300; the related map acquirer 310 and the like of the navigation device 200 may be provided to an unshown server. A configuration may also be provided in which contents data, map information, contents related map information, and contents main data corresponding to set location points transmitted from the server may be output from the output device 400 by the control of the navigation device 200. Furthermore, the storage 730, the TS processor 751, the packet demodulator 752, the linked data location point coordinate recognizer 753, the related map acquirer 754 and the like of the contents processing device 700 may be attached to an unshown server. Also, configuration may also be provided in which contents data, map information, contents related map information, and contents main data corresponding to set location points transmitted from the server may be output by the output device 800 through the control of the contents processing device 700.

Each of the above functions are built into programs. However, configuration may also be made using, for example, hardware of circuit boards or elements such as a single IC (Integrated Circuit). Note that, by using configuration in which reading out can be accomplished from a program or a separate recording medium, handling becomes easy and use can be easily expanded.

In addition, with each embodiment, the BML standard is employed as the example of a digital file. However it is not limited to this, and the present invention can apply, for example, the MHP (Multimedia Home Platform) standard as well.

The specific structure and procedures for implementing the present invention may be appropriately changed within the scope of the present invention.

### [Effect of Embodiment]

As indicated, in the above embodiment, using the output controller 320, the processor 270 of the navigation device 200 acquires the contents data from the contents processor 290, and displays it by the display 420 of the output device 400. Subsequently, the processor 270 acquires the program linked data of the contents data output by the output device 400 with using the linked data location point coordinate recognizer 301. Also, if the processor 270 recognizes, by the linked data location point coordinate recognizer 301, that the contents data of the program linked data has a character string of location point character string information, then by the related map acquirer 310, the map information corresponding to the location points shown by the character string is acquired as contents related map information. Subsequently, the output controller 320 displays the contents related map information on the display 420 of the output device 400.

Owing to this, if the navigation device 200, in a state in which an arbitrary program is output, acquires the program linked data corresponding to the scene relating to specific location points, then the contents related map information corresponding to specific location points can be displayed on the display 420 of the output device 400. Therefore, the navigation device 200 can appropriately display various pieces of information.

In addition, the processor 270 of the navigation device 200, by the output controller 320 acquires map information relating to vehicle movement from the navigation processor 280, and displays it on the display 420 of the output device 400. Subsequently, the processor 270 acquires the set location point information by the set location point coordinate recognizer 302. Also, if the set location point coordinate recognizer 302 recognizes set location points based on set location point information, then various pieces of information relating to movement is appropriately acquired from the navigation processor 280, and the location points corresponding to the set location points are specified. In addition, the processor 270 acquires the program linked data of the contents data pre-selected by the user, by the linked data location point coordinate recognizer 301. Also, if the processor 270, by the linked data location point coordinate recognizer 301, recognizes that the contents data of the program linked data contains a character string showing location points corresponding to set location points by the contents data of the program linked data, then the contents main data corresponding to the program linked data, or in other words corresponding to the set location points, is acquired by the output controller 320. Subsequently, the output controller 320 displays the contents main data on the display 420 of the output device 400.

Owing to this, the navigation device 200, in a state in which the map information relating to vehicle movement is displayed on the display 420 of the output device 400, if the program linked data corresponding to the scene relating to a location point within a radius of 1 kilometer from the current-position of the vehicle is acquired, then the scene relating to the location points can be displayed on the display 420. Thus, the navigation device 200 can appropriately output various pieces of information.

Furthermore, the processor 750 of the contents processing device 700, acquires contents data from the packet demodulator 752 by the output controller 755, and displays it on the display 820 of the output device 800. Subsequently, the processor 750, by the linked data location point coordinate recognizer 753, acquires the program linked data of the contents data output by the output device 800. Also, if the processor 750, by the linked data location point coordinate recognizer 753, recognizes that the contents data of the program linked data has location point character string information, then by the related map acquirer 754, map information corresponding to location points shown by the character string is acquired as contents related map information. Subsequently, the output controller 755 displays the contents related map information on the display 820 of the output device 800.

Owing to this, if the contents processing device 700, in a state in which arbitrary programming is output, acquires a program linked data corresponding to the scene relating to specific location points, then the contents related map information corresponding to the specific location points can be displayed on the display 820 of the output device 800. Thus, the contents processing device 700 can appropriately output various pieces of information.

## Claims

1. An output control device, comprising:
a program data acquirer that acquires program data including image data;
a contents data acquirer that acquires contents data relating to contents of the program data distributed together with the program data;
a display controller that controls to display the image data on a display unit;
a searching section that searches for location point information relating to a location point from the contents data; and
a map information acquirer that acquires map information corresponding to a specific region including the location point of searched location point information, wherein
the display controller controls to display the acquired map information on the display unit.

2. The output control device according to claim 1, wherein the display controller controls to display the map information in place of at least a part of the image data displayed on the display unit.

3. The output control device according to claim 1 or 2, wherein
the map information includes coordinate information relating to coordinates of the location point, and
the map information acquirer acquires map information having the coordinate information corresponding to the location point of the searched location point information.

4. The output control device according to claim 1 or 2, wherein
the map information includes map location point character data indicating the location point, and
the map information acquirer acquires map information that includes the map location point character data indicating the location point of the searched location point information.

5. The output control device according to any of claims 1 to 4, further comprising:
a distribution date and time information acquirer that acquires distribution start date and time information relating to date and time at which distribution of the program data is started and distribution termination date and time information relating to date and time at which the distribution of the program data is terminated, wherein
the display controller starts displaying of the map information at the date and time of the distribution start date and time information, and completes displaying of the map information at the date and time of the distribution termination date and time information.

6. The output control device according to any of claims 1 to 4, wherein the display controller terminates displaying of the map information when recognizing that a predetermined period of time or more is elapsed since the displaying of the map information is started.

7. The output control device according to any of claims 1 to 6, wherein the display controller controls the display unit to display map associated information relating to the location point, the display map associated information being associated with the map information and then acquired.

8. The output control device according to any of claims 1 to 7, further comprising:
a route location point information acquirer which acquires route location point information relating to a location point in the vicinity of a route on which a movable body moves, wherein
the searching section recognizes the route location point information as the location point information, and searches the recognized location point information from the contents data.

9. The output control device according to any of claims 1 to 8, further comprising:
a landscape location point information recognizer which acquires landscape information relating to landscape outside the movable body and recognizes landscape location point information relating to a location point present in the landscape of the acquired landscape information, wherein
the searching section recognizes the landscape location point information as the landscape location point information and searches the recognized location point information from the contents data.

10. The output control device according to any of claims 1 to 9, further comprising:
a current-position information acquirer that acquires current-position information relating to a current-position of the movable body;
a route searching section that searches a route from the current-position to the location point based on the current-position information, the location point information searched by the searching section, and the map information; and
a route output controller that controls to output the searched route by a route output unit.

11. An output control device, comprising:
a route location point information acquirer that acquires route location point information relating to a location point in the vicinity of a route on which a movable body moves;
a map information acquirer that acquires map information corresponding to a specific region including the location point of the route location point information;
a display controller which controls to display the map information on a display unit;
a program data acquirer that acquires program data including image data;
a contents data acquirer that acquires contents data relating to contents of the program data distributed together with the program data; and
a searching section that searches the route location point information from the contents data, wherein
the display controller controls to display image data of the program data corresponding to the contents data in which the route location point information can be searched.

12. The output control device according to claim 11, wherein the display controller controls to display the image data in place of at least a part of the map information displayed on the display unit.

13. The output control device according to claim 11 or 12, further comprising:
a distribution date and time information acquirer that acquires distribution start date and time information relating to data and time at which distribution of the program data is started and distribution termination date and time information relating to date and time at which the distribution of the program data is terminated, wherein
the display controller starts displaying of the image data at the date and time of the distribution start date and time information, and terminates displaying of the image data at the date and time of the distribution termination date and time information.

14. The output control device according to claim 11 or 12, wherein the display controller terminates displaying of the map information when recognizing that a predetermined period of time or more elapsed since the displaying of the image data is started.

15. The output control device according to any of claims 11 to 14, wherein the display control device controls the display unit to display program associated information relating to the program data, the display program associated information being associated with the program data and then acquired.

16. The output control device according to any of claims 11 to 15, further comprising a contents data output controller that controls the contents data output section to output the contents data.

17. The output control device according to any of claims 11 to 16, further comprising:
a landscape location point information recognizer which acquires landscape information relating to the landscape outside the movable body and recognizes landscape location point information relating to a location point present in the landscape of the acquired landscape information, wherein
the searching section recognizes the landscape location point information as the landscape location point information and searches the recognized location point information from the contents data.

18. The output control device according to any of claims 1 to 17, further comprising a storage controller which controls a storage to store the map information corresponding to the program data together with the program data.

19. The output control device according to claim 18, further comprising:
a map correspondent program acquirer which searches for the map information displayed on the display unit from the storage and acquires program data corresponding to the searched map information; and
a map correspondent program output controller which controls a map correspondent program output section to output the program data acquired by the map correspondent program acquirer.

20. The output control device according to claim 18 or 19, further comprising:
a current-position information acquirer that acquires current-position information relating to a current-position of the movable body;
a current-position correspondent program acquirer which searches the map information including the current-position information relating to the current-position of the movable body and acquires the program data corresponding to the searched map information; and
a current-position correspondent program output controller which controls a current-position correspondent program output section to output the program data acquired by the current-position correspondent program acquirer.

21. An output control method for controlling a computing section to display map information on a display unit, the method executed by the computing section comprising the steps of:
acquiring program data including image data;
acquiring contents data relating to contents of the program data distributed together with the program data;
controlling the display unit to display the image data;
searching location point information relating to a location point from the contents data;
acquiring the map information corresponding to a specific region including the location point of the searched location point information; and
controlling the display unit to display the acquired map information.

22. An output control method for controlling a computing section to display image data of program data which includes the image data, the method executed by the computing section comprising the steps of:
acquiring route location point information relating to a location point in the vicinity of a route on which a movable body moves,
acquiring map information corresponding to a specific region including the location point of the route location point information;
controlling the display unit to display the map information;
acquiring the program data;
acquiring contents data relating to contents of the program data distributed together with the program data;
searching the route location point information from the contents data; and
controlling the display unit to display the image data of the program data corresponding to the contents data by which the route location point information can be searched.

23. An output control program that makes a computing section function as the output control device according to any of claims 1 to 20.

24. An output control program executing the output control method according to claim 21 or 22 by a computing section.

25. A recording medium storing the output control program according to claim 23 or 24 in a manner readable by a computing section.
